(19) Europäisches Patentamt / European Patent Office / Office européen des brevets

(11) EP 2 756 329 B1

(12) # EUROPÄISCHE PATENTSCHRIFT

(45) Veröffentlichungstag und Bekanntmachung des Hinweises auf die Patenterteilung:
**07.07.2021 Patentblatt 2021/27**

(21) Anmeldenummer: **12769898.3**

(22) Anmeldetag: **04.09.2012**

(51) Int Cl.:
***G01S 13/93*** *(2020.01)* ***H01Q 21/06*** *(2006.01)*
***G01S 7/03*** *(2006.01)* ***G01S 13/34*** *(2006.01)*

(86) Internationale Anmeldenummer:
**PCT/EP2012/003701**

(87) Internationale Veröffentlichungsnummer:
**WO 2013/034281 (14.03.2013 Gazette 2013/11)**

(54) **ABBILDENDER RADARSENSOR MIT SCHMALER ANTENNENKEULE UND WEITEM WINKEL-DETEKTIONSBEREICH**

IMAGING RADAR SENSOR WITH NARROW ANTENNA LOBE AND WIDE ANGLE-DETECTION RANGE

CAPTEUR DE RADAR IMAGEUR À LOBE D'ANTENNE ÉTROIT ET ZONE DE DÉTECTION ANGULAIRE LARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2011 DE 102011113018**

(43) Veröffentlichungstag der Anmeldung:
**23.07.2014 Patentblatt 2014/30**

(73) Patentinhaber: **Astyx GmbH**
**85521 Ottobrunn (DE)**

(72) Erfinder:
- **KÖRBER, Richard**
  **91352 Hallerndorf (DE)**
- **GIERE, Andre**
  **85667 Oberpframmern (DE)**

(74) Vertreter: **Berkenbrink, Kai-Oliver**
**Patentanwälte Becker & Müller**
**Turmstrasse 22**
**40878 Ratingen (DE)**

(56) Entgegenhaltungen:
**WO-A1-2010/066458** **DE-B3-102007 039 897**
**US-A1- 2004 027 305** **US-A1- 2006 066 474**
**US-A1- 2011 080 314**

- **KEES N ET AL: "Improvement of angular resolution of a millimeterwave imaging system by transmitter location multiplexing", MICROWAVE SYMPOSIUM DIGEST, 1995., IEEE MTT-S INTERNATIONAL ORLANDO, FL, USA 16-20 MAY 1995, NEW YORK, NY, USA,IEEE, US, 16. Mai 1995 (1995-05-16), Seiten 969-972, XP010612476, DOI: 10.1109/MWSYM.1995.406134 ISBN: 978-0-7803-2581-4 in der Anmeldung erwähnt**
- **None**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 756 329 B1

## Beschreibung

Die Erfindung betrifft eine Vorrichtung zur Erhöhung des Schwenkbereichs des Antennenstrahls des Empfangsarrays von abbildenden Radarsensoren. Millimeterwellen-Radarsensoren, z. B. für automobile Anwendungen bei kurzen Entfernungen, sollen neben einer hohen Entfernungs- und Winkelauflösung auch einen möglichst breiten Winkeldetektionsbereich besitzen, damit die Anzahl der um das Fahrzeug montierten Sensoren auf ein Minimum reduziert werden kann.

Die Sensoren werden in der Regel für die Applikation "aktive Sicherheit" eingesetzt und dienen neben dem Fußgängerschutz auch zur Unterstützung des Fahrers im Stadtverkehr sowie im dichten Stop- und Go-Verkehr.

Aus der Dissertation von Dr. Winfried Mayer mit dem Titel "Abbildender Radarsensor mit sendeseitig geschalteter Gruppenantenne", Cuvillier Verlag, Göttingen 2008, ISBN 978-3-86727-565-1 ist ein Verfahren sowie eine Vorrichtung bekannt, welches mit der Technik der digitalen Strahlformung, bei denen ein Antennenarray mit mehreren Sendern und mehreren Empfängern eingesetzt wird, ein Gebiet überwacht.

Durch den zeitlich aufeinanderfolgenden Einsatz der Sender, kann der Antennenöffnungswinkel verkleinert werden, ohne dass dabei die physikalische Größe der Empfangsantenne zunimmt.

In der Veröffentlichung /1/"N.Kees.E.Schmidhammer and J.Detlefsen" Improvement of angular resolution of a millimeterwave imaging System by transmitter location multiplexing." in IEEE MTT-S Int. Microw. Symp. Dig., Orlando, FL. May 1995, vol.2, pp.969-972" wird ein Verfahren zur Erzeugung einer synthetischen Antennenapertur beschrieben, mit dessen Hilfe die Antennenstrahlbreite reduziert und damit die Winkelauflösung verbessert werden kann.

Die dargestellten Verfahren haben den Zweck der Reduzierung der Antennenbeambreite durch Verdoppelung der Apertur mit Hilfe eines synthetischen Arrays, nicht jedoch der Erhöhung des maximal möglichen Schwenkwinkels.

Ferner ist eine Vorrichtung gemäß dem Oberbegriff des Anspruchs 1 aus der US 2006/066474 A1 bekannt. Weitere Antennenanordnungen gemäß dem Stand der Technik werden in der DE 10 2007 039 897 B2, der WO 2010/066458 A1, der US 2011/080314 A1 sowie der US 2004/027305 A1 gezeigt.

Die Aufgabe der Erfindung ist es, eine Vorrichtung zur Verfügung zu stellen, bei dem eine Verkopplung durch Annäherung der Antennenzeilen vermieden wird, und damit ein weiter Schwenkwinkel realisiert werden kann.

Die Aufgabe wird mit den Merkmalen des unabhängigen Anspruchs 1 gelöst. Der maximal mögliche Schwenkwinkel $\Phi_{max}$ eines linearen Antennenarrays mit gleichem Zeilenabstand berechnet sich nach der Formel

$$\Phi_{max} = arcsin\left[\frac{\lambda}{d} \times \left(1 - \frac{1}{N}\right) - 1\right] \qquad (1)$$

mit

$\lambda$: Wellenlänge

d: Zeilenabstand der Einzelzeilen

N: Anzahl der Antennenzeilen

Eine typische Wellenlänge $\lambda$ ist 3,9 mm, was einer Sendefrequenz von etwa 77GHz entspricht. Ein typischer Zeilenabstand ist zwischen 1,5 bzw. 1,8 mm und 3 mm.

Aus der Formel ergibt sich, dass der Schwenkwinkel also umso größer ist, je kürzer der Abstand zwischen den Antennenzeilen ist.

Bei einer sog. Microstrip-Patch-Antenne im Millimeterwellenbereich lassen sich üblicherweise Schwenkwinkel bis zu +-40 Grad erzielen. Darüber hinaus nähern sich die Einzelzeilen soweit an, dass eine nicht mehr zu vernachlässigende Überkopplung zwischen den Zeilen entsteht, und eine Strahlformung nicht mehr möglich ist.

Es wird eine Vorrichtung mit mindestens zwei schaltbaren Sendeantennen und einer Vielzahl von Empfangsantennen bereitgestellt. Die Sendeantennen und Empfangsantennen erstrecken sich jeweils länglich, parallel zueinander, in eine erste Richtung.

Die Empfangsantennen sind in einer Reihe angeordnet. Die Reihe erstreckt sich in eine zweite Richtung. Dabei haben benachbarte Empfangsantennen jeweils einen Abstand d2 zueinander.

In einer ersten Ausführungsform sind die Sendeantennen in Bezug auf die erste Richtung zueinander versetzt, und in Bezug auf die zweite Richtung einen Abstand d voneinander angeordnet. Der Abstand d2 benachbarter Empfangsantennen ist mindestens doppelt so groß, vorzugsweise doppelt so groß, wie der Abstand d der Sendeantennen.

Durch den Versatz der Sendeantennen ist es möglich, den Abstand zwischen den Sendeantennen so klein zu wählen, wie es für große Schwenkwinkel notwendig ist, ohne dass die Abstrahlcharakteristik einer Sendeantenne stark von dem Vorhandensein der jeweils anderen Sendeantenne gestört wird.

Vorzugsweise gilt folgendes:

$$\arcsin\left[\frac{\lambda}{d}\times\left(1-\frac{1}{N}\right)-1\right]>40^{\circ}$$

wobei die Anzahl der Empfangsantennen N ist. Damit sind Schwenkwinkel größer 40 Grad möglich. Unter Schwenkwinkel wird die Abweichung von der Hauptstrahlrichtung verstanden. Bei einem Schwenkwinkel von 70 ° kann in dem Bereich zwischen -70° und +70° geschwenkt werden.

In der ersten Ausführungsform wird eine erste der Sendeantennen derart gespeist, dass die Einspeisung in die erste Richtung erfolgt und eine zweite der Sendeantennen derart gespeist wird, dass die Einspeisung entgegen der ersten Richtung erfolgt.

Dadurch ist es bei dieser Ausführungsform möglich, die Treiber für die beiden Sendeantennen benachbart anzuordnen und dann zu den beiden Sendeantennen in zwei Richtungen abzuzweigen, wodurch die Leitungen zwischen den Sendeverstärker und den Sendeantennen möglichst kurz und zugleich möglichst gleichmäßig ausgebildet werden können.

Gemäß einem Aspekt der Anmeldung umfasst die Vorrichtung zur Schwenkung der Antennenkeule mindestens 2 Sendeantennen und mehrere in Reihe angeordnete Empfangsantennen mit gleichem Abstand, ein sog. "linear uniform array", wobei die Sendeantennen in dieser ersten Ausführungsform zueinander in einem Abstand d angeordnet sind, welcher dem halben Abstand zwischen zwei Empfangszeilen entspricht. Damit hierbei keine Überkopplung zwischen den beiden Sendeantennen entsteht, sind diese wie in Fig. 2 dargestellt, einander gegenüberliegend angeordnet.

Um nun beispielsweise einen Schwenkwinkel von 70 Grad zu realisieren, wären die Empfangsantennen derart dicht beieinander anzuordnen, dass eine nicht zu vernachlässigende elektromagnetische Verkopplung zwischen den Einzelantennen entsteht, welche das Diagramm des gesamten Arrays stören würde. Um diese zu vermeiden, wird nach dem Prinzip des "Transmitter location Multiplexing", wie es in /1/ beschrieben wird, ein künstliches Array erzeugt, welches genau zwischen den Empfangszeilen zum Liegen kommt. Dabei werden die Sender zeitlich aufeinanderfolgend betrieben und die Empfangssignale aus beiden Meßzyklen miteinander verknüpft. Das Ergebnis für die erste Ausführungsform entspricht einem synthetischen Array, wie es in Fig. 3 abgebildet ist. Die Phasen der Empfangssignale des synthetischen Arrays bei nur einem aktiven Sender entsprechen dabei den Phasen des realen Arrays bei alternierenden Sendern. Bei bewegten Objekten wird die Strahlschwenkung durch den Dopplereffekt verfälscht. Dieses ist durch eine Dopplerfilterung mit anschließender Korrekturrechnung zu kompensieren.

In einem Beispiel, nicht Teil der Erfindung, wird die Überlagerung von realer und synthetischer Empfangsantennenzeile die Doppler-Phasenverschiebung messtechnisch erfasst und damit die Korrekturrechnung wie im Patent DE 102011113015.6 "Abbildender Radarsensor mit synthetischer Vergrößerung der Antennenaperatur und zweidimensionaler Strahlschwenkung" beschrieben durchgeführt.

Ferner umfasst die Vorrichtung einen Frequenzgenerator zur Erzeugung von Signalen, welche von den Sendeantennen zeitlich aufeinanderfolgend abgegeben werden, mindestens eine Verarbeitungseinheit zur Durchführung mindestens einer Verknüpfung der von den Empfangsantennen abgegebenen Empfangssignale nach der Methode der digitalen Strahlformung zur Erzeugung eines gebündelten Antennenstrahls und eine Wiedergabeeinrichtung zur Darstellung der Position des Objekts.

Gemäß einem Aspekt der Anmeldung wird eine Vorrichtung zur Strahlschwenkung zu extremen Schwenkwinkeln, mit mindestens zwei schaltbaren Sendeantennen bereitgestellt. Dabei sind mehrere in Reihe angeordnete Empfangsantennen vorgesehen, wobei die Empfangsantennen in einem Abstand angeordnet sind, welcher dem doppelten Abstand entspricht, der nötig ist um den Strahl in eindeutiger Weise zu schwenken, wobei die Sendeantennen bei der ersten Ausführungsform gegenüberliegend in einem Abstand angeordnet sind, welcher dem Abstand entspricht der für eine eindeutige Strahlschwenkung erforderlich ist.

Zweckmäßigerweise weist die Vorrichtung eine Anzahl von 8, 16 oder 32 Empfangsantennen auf.

Gemäß vorteilhafter Weiterbildung ist die Position des Objekts mittels der Wiedergabeeinrichtung über ein Antennendiagramm darstellbar.

Nachfolgend werden Ausführungsbeispiele der Erfindung anhand von Figuren näher erläutert. Einander entsprechende Teile sind in allen Figuren mit den gleichen Bezugszeichen versehen.

| | |
|---|---|
| Figur 1 | zeigt schematisch die Funktionsblöcke eines Radarsensors; |
| Figur 2 | zeigt die Anordnung der Antennen des Radarsensors; |
| Figur 3 | zeigt die reale Apertur und die sich ergebene synthetische Anordnung gemäß einer ersten Ausführungsform; |
| Figur 4 a,b | veranschaulichen, wie eine Strahlschwenkung durchgeführt wird; |
| Figur 5 | zeigt ein Antennendiagramm ohne Strahlschwenkung |
| Figur 6 | zeigt ein Antennendiagramm mit einer starken Strahlschwenkung. |

Die Erfindung betrifft eine Vorrichtung gemäß Anspruch 1, insbesondere ein frequenzmoduliertes Dauerstrich Radar (FMCW-Radar) nach Fig. 1, welches ein Gebiet mit Hilfe der digitalen Strahlformung überwacht. Der Radarsensor besteht dabei aus einem Sender mit zwei Ausgängen und mehreren, in diesem Fall sechszehn Empfängern. Fig. 1 zeigt einen Sender mit integriertem Frequenzmodulator und 2 schaltbaren Ausgängen und 4 Empfänger-Blöcke mit je vier Empfangskanälen. In den Empfängerblöcken werden die Empfangssignale auf ein Basisband herabgemischt.

Figur 1 zeigt dabei einen Radarsensor mit einem Sender (1), zwei Sendeantennen (10), vier Empfängerblöcken (2) und sechszehn Empfangsantennen (20). Der Sender (1) enthält einen Modulator (16), einen Frequenzgenerator (13), einen Frequenzteiler (14), einen einstellbaren Verstärker (12) sowie zwei schaltbare Treiber (11). Der Frequenzgenerator (13) erzeugt ein Ausgangssignal mit einer kontinuierlich variierenden Frequenz zwischen 76 bis 77 GHz. Die Variation wird durch den Modulator (16) bewirkt. Das Ausgangssignal wird an den Verstärker (12) ausgegeben, dessen Amplitude einstellbar ist. Das Ausgangssignal des Verstärkers (12) wird an die Eingänge der zwei Treibern (11), die ein- und ausschaltbar sind, ausgegeben. Die Ausgänge der Treiber (11) treiben jeweils eine der Sendeantennen (10).

Der Frequenzgenerator (13) des Senders 2 gibt an seinem Ausgang auch ein Signal an den Frequenzteiler (14) aus, der ein Ausgangssignal ausgibt, das die halbe Frequenz des Ausgangssignals des Frequenzgenerators hat.

Die Empfängerblöcke 2 enthalten halten jeweils einen Frequenzmultiplizierer (22) und vier Mischer (21). Die Frequenzmultiplizierer (22) empfangen das Ausgangssignal des Frequenzteilers (14) des Senders (1), erzeugen jeweils ein Signal mit der doppelten Frequenz als ihr Eingangssignal, und geben jeweils ihre erzeugten Signale an erste Eingänge der Mischer (21) aus. Die Mischer (21) sind jeweils mit zweiten Eingängen mit jeweils einer Empfangsantenne (20) verbunden, sodass in dem Mischer (21) das von der Empfangsantenne empfangene Signal jeweils auf ein Basisband herabgemischt wird. Die Ausgangssignale der Mischer (21) werden in einer Figur 1 nicht gezeigten Verarbeitungseinheit ausgewertet.

Fig. 2 zeigt die physikalische Anordnung der Antennen bei einer ersten Ausführungsform. Sie zeigt dabei die Anordnung der Sendeantennen (10) und der Empfangsantennen (20) in der Draufsicht. Die Sendeantennen (10) und die Empfangsantennen (20) sind als Patchantennen ausgeführt, die sich in einer x-y- Ebene erstrecken. Die Empfangsantennen (20) weisen jeweils sogenannte Antennenzeilen (28) auf, die aus jeweils neun Empfangsstrahlelementen (24) und dazwischen liegenden Verbindungsleitungen bestehen. Die Empfangsstrahlelemente (24) einer Antennenzeile (28) sind hintereinander aufgereiht, sodass die Antennenzeile (28) länglich ist und sich in y-Richtung erstreckt. Die Antennenzeilen (28) von der Empfangsantenne (20) verlaufen alle parallel zueinander und befinden sich auf gleicher Höhe in Bezug auf die y-Richtung. Die Antennenzeilen (28) sind somit im Bezug auf die x-Richtung nebeneinander angeordnet, wobei die äußeren Antennenzeilen als rechte Antennenzeile beziehungsweise als linke Antennenzeile bezeichnet werden.

Die z-Richtung zeigt aus dem Zeichnungsblatt nach oben. Die z-Richtung ist die Richtung, in der Gegenstände detektiert werden sollen. Wenn beispielsweise der Radarsensor in einem Landfahrzeug implementiert ist und Gegenstände in Fahrtrichtung detektieren soll, ist die z-Richtung die Fahrrichtung.

Die Antennenzeilen (28) weisen jeweils einen Einspeisepunkt auf, mit dem sie über eine Streifenleitung (23) mit einem Eingang des Empfängerblocks (2) verbunden sind. Die Empfangsantennen (20) umfassen jeweils nur eine Antennenzeile (28), sodass jeweils nur eine Antennenzeile (28) über seinen jeweiligen Einspeisepunkt mit einem Eingang eines Empfängerblocks (2) verbunden ist.

Die zwei Sendeantennen (10) enthalten jeweils eine Antennenzeile (18). Die Antennenzeilen (18) weisen jeweils Senderstrahlelemente (17) und dazwischen liegende Verbindungsleitungen auf. Die Senderstrahlelemente (17) einer Antennenzeile (18) sind hintereinander aufgereiht, sodass die Antennenzeile (18) länglich ist und sich in y-Richtung erstreckt. Die Antennenzeilen (18) verlaufen alle parallel zueinander. Allerdings sind die Antennenzeilen (18) zueinander in Bezug auf die erste Richtung (y) zueinander versetzt. In Bezug auf die zweite Richtung (x) weisen die Antennenzeilen einen Abstand d voneinander auf. Der Abstand wird stets auf die Phasenschwerpunkte der jeweiligen Antennenzeilen bezogen.

Der Abstand d2 benachbarter Empfangsantennen (20) ist doppelt so groß wie der Abstand d der Sendeantennen (10).

Eine erste der Sendeantennen (10) wird derart gespeist, dass die Einspeisung in die ersten Richtung y erfolgt und eine zweite der Sendeantennen (10) wird derart gespeist, dass die Einspeisung entgegen der ersten Sendeantenne in Richtung (y) erfolgt.

Die Sendeantennen und das Empfangsantennenarray haben typischerweise eine vertikale Beambreite von 10 Grad. Die horizontale Beambreite des Senders ist so gestaltet, dass der gewünschte Detektionsbereich von +-70 Grad näherungsweise ausgeleuchtet wird. Das gleiche gilt für die horizontale Beambreite der Einzelzeilen des Empfangsarrays.

Die Empfangssignale werden vom Empfänger phasenrichtig in das Basisband umgesetzt und digitalisiert. Die von den alternierenden Sendeantennen abgestrahlten, reflektierten und empfangenen Signale werden nun im nachfolgenden Signalprozessor zum synthetischen Array zusammengeführt. Die Strahlformung und Schwenkung erfolgt nun nach der Methode des "digital Beamforming".

Figur 3 zeigt die reale Apertur und die sich ergebene synthetische Anordnung gemäß einer ersten Ausführungsform.

Um die Nebenzipfel des Antennenarrays zu reduzieren, werden zunächst die Signale der Einzelzeilen gewichtet. Dies erfolgt typischerweise nach einer sog. "Dolph-Chebychev"-Funktion.

Soll nun eine Strahlschwenkung um den Winkel θ durchgeführt werden, so sind die Signale der Einzelzeilen nach der in den Figuren 4a und 4b skizzierten Methode um ein Vielfaches des Winkels a in der Phase zu verschieben.

Der Winkel α errechnet sich nach der Formel

$$\alpha = -2 * \pi * \frac{d}{\lambda} * \sin\theta$$

mit

λ : Wellenlänge

d: Zeilenabstand des synthetischen Arrays

Figur 5 zeigt das Antennendiagramm ohne Strahlschwenkung. In Figur 6 ist das Antennendiagramm beim extremen Schwenkwinkel von 70° zu sehen. Wegen des schrägen Blickwinkels tritt zunächst eine Verbreiterung des Antennenstrahls auf. Ferner reduziert sich der Antennengewinn, da die Diagramme der Einzelzeilen bei diesem extremen Winkel ebenfalls einen reduzierten Gewinn haben. Desgleichen steigen die Nebenzipfel an. Das Diagramm ist aber dennoch ausreichend gut, um Objekte am äußeren Rand des Detektionsbereichs zu erkennen. Die Winkelmessgenauigkeit reduziert sich dabei entsprechend der Verbreiterung der Hauptkeule des Arraydiagramms.

**Bezugszeichenliste**

| | |
|---|---|
| 1 | Sender |
| 2 | Empfängerschaltung |
| 10 | Sendeantenne |
| 11 | Treiber |
| 12 | Verstärker |
| 13 | Frequenzgenerator |
| 14 | Frequenzteiler |
| 16 | Modulator |
| 17 | Sendearrayelement |
| 20 | Empfangsantenne |
| 21 | Mischer |
| 22 | Frequenzteiler |
| 23 | Streifenleitung |
| 24 | Empfangsarrayelement |
| 25 | Chip |

**Patentansprüche**

**1.** Vorrichtung zur Bestimmung der Position von Objekten, insbesondere sich bewegender Objekte, mit

- mindestens zwei schaltbaren Sendeantennen (10),
- einer Vielzahl von Empfangsantennen (20),
- wobei die Sendeantennen (10) und Empfangsantennen (20) sich jeweils länglich, parallel zueinander, in eine erste Richtung (y) erstrecken, und die Empfangsantennen (10) in einer Reihe angeordnet sind und die Reihe sich in eine zweite Richtung (x) erstreckt, wobei benachbarte Empfangsantennen (20) jeweils einen Abstand d2 zueinander haben,

**dadurch gekennzeichnet, dass**
die Sendeantennen (10) entlang der ersten Richtung (y) parallel zu dieser versetzt sind, und in Bezug auf die zweite Richtung (x) einen Abstand d voneinander haben, und der Abstand d2 benachbarter Empfangsantennen (20) mindestens doppelt so groß wie der Abstand d der Sendeantennen (10) ist.

2. Vorrichtung nach Anspruch 1,
wobei die Anzahl der Empfangsantennen verwendet im synthetischen Antennenarray zur Strahlformung N ist, die Empfangsantennen (20) Signale mit einer Wellenlänge λ empfangen und folgendes gilt:

$$\arcsin\left[\frac{\lambda}{d}\ x\ \left(1-\frac{1}{N}\right)-1\right] > 40°$$

3. Vorrichtung nach einem der Ansprüche 1 bis 2,
wobei eine erste der Sendeantennen (10) derart gespeist wird, dass die Einspeisung in die erste Richtung (y) erfolgt und eine zweite der Sendeantennen (10) derart gespeist wird, dass die Einspeisung entgegen der ersten Richtung (y) erfolgt.

4. Vorrichtung nach Anspruch 1,
wobei die zweite Richtung (x) senkrecht zur ersten Richtung (y) ist.

5. Vorrichtung nach einem der vorhergehenden Ansprüche,
mit einem Frequenzgenerator (13) zum Erzeugen von Signalen, welche von einer ersten der Sendeantennen (10) in einem ersten Zyklus und von einer zweiten der Sendeantennen (10) in einem zeitlich danach folgenden zweiten Zyklus abgegeben werden.

6. Vorrichtung nach einem der vorhergehenden Ansprüche, **gekennzeichnet durch** eine Anzahl von mehr als, vorzugsweise 8, 16 oder 32, oder gleich 4 Empfangsantennen.

7. Vorrichtung nach einem der vorhergehenden Ansprüche,
mit einer Wiedergabeeinrichtung zum Darstellen oder zur Datenausgabe einer Position des Objekts.

## Claims

1. A device for determining the position of objects, in particular moving objects, comprising

- at least two switchable transmitting antennas (10),
- a plurality of receiving antennas (20),
- the transmitting antennas (10) and receiving antennas (20) respectively extending longitudinally, parallel to one another, in a first direction (y), and the receiving antennas (10) being arranged in a row and the row extending in a second direction (x), adjacent receiving antennas (20) respectively being spaced apart from one another by a distance d 2 ,

**characterized in that**
the transmitting antennas (10) being offset from one another in relation to the first direction (y) and being spaced apart from one another by a distance d in relation to the second direction (x), and the distance d 2 between adjacent receiving antennas (20) being at least twice as great as the distance d between the transmitting antennas (10).

2. The device according to claim 1,
the number of receiving antennas used in the synthetic antenna array for beam forming being N, the receiving antennas (20) receiving signals with a wavelength λ, and the following applying:

$$\arcsin\left[\frac{\lambda}{d}\ x\ \left(1-\frac{1}{N}\right)-1\right] > 40°$$

3. The device according to one of claims 1 to 2,
wherein a first of the transmitting antennas (10) is fed such that the feeding in takes place in the first direction (y) and a second of the transmitting antennas (10) is fed such that the feeding in takes place contrary to the second in direction (y).

4. The device according to claim 1,

the second direction (x) being perpendicular to the first direction (y).

**5.** The device according to one of the preceding claims,
comprising a frequency generator (13) for producing signals which are issued by a first of the transmitting antennas (13) in a first cycle and by a second of the transmitting antennas (10) in a second cycle following the latter chronologically.

**6.** The device according to one of the preceding claims, **characterized by** a number of more than, preferably 8, 16 or 32, or precisely 4 receiving antennas.

**7.** The device according to one of the preceding claims,
comprising a display device for showing or for providing data output on a position of the object.

## Revendications

**1.** Dispositif de détermination de la position d'objets, en particulier d'objets en mouvement, comportant

- au moins deux antennes d'émission commutables (10),
- une multitude d'antennes de réception (20),
- les antennes d'émission (10) et les antennes de réception (20) s'étendant respectivement longitudinalement, parallèlement les unes par rapport aux autres dans un premier sens (y), et les antennes de réception (10) étant disposées en une rangée et la rangée s'étendant dans un second sens (x), les antennes de réception voisines (20) ayant respectivement une distance d2 les unes par rapport aux autres,

**caractérisé en ce que**
les antennes d'émission (10) sont décalées dans le premier sens (y) parallèlement à celui-ci, et ont, par rapport au deuxième sens (x), une distance d les unes par rapport aux autres, et que la distance d2 entre les antennes de réception voisines (20) est au moins le double de la distance d entre les antennes d'émission (10).

**2.** Dispositif selon la revendication 1,
dans lequel le nombre d'antennes d'émission utilisées dans la matrice d'antennes synthétique pour le formage de rayons est N, les antennes de réception (20) reçoivent des signaux d'une longueur d'onde λ et on a ce qui suit :

$$\left[\frac{\lambda}{d}\ x\ \left(1-\frac{1}{N}\right)-1\right] > 40°$$

.

**3.** Dispositif selon une des revendications 1 à 2,
dans lequel une première des antennes d'émission (10) est alimentée de manière à ce que l'alimentation ait lieu dans le premier sens (y) et une seconde des antennes d'émission (10) est alimentée de manière à ce que l'alimentation se fasse en sens inverse du premier sens (y).

**4.** Dispositif selon la revendication 1,
dans lequel le second sens (x) est perpendiculaire au premier sens (y).

**5.** Dispositif selon une des revendications précédentes, comportant un générateur de fréquence (13) pour la génération de signaux qui sont émis par une première des antennes d'émission (10) dans un premier cycle et par une seconde des antennes d'émission (10) dans un second cycle temporellement suivant.

**6.** Dispositif selon une des revendications précédentes, **caractérisé par** un nombre de préférence de plus de 8, 16 ou 32, ou égal à 4 d'antennes de réception.

**7.** Dispositif selon une des revendications précédentes, comportant un dispositif de restitution pour représenter ou pour émettre des données d'une position de l'objet.

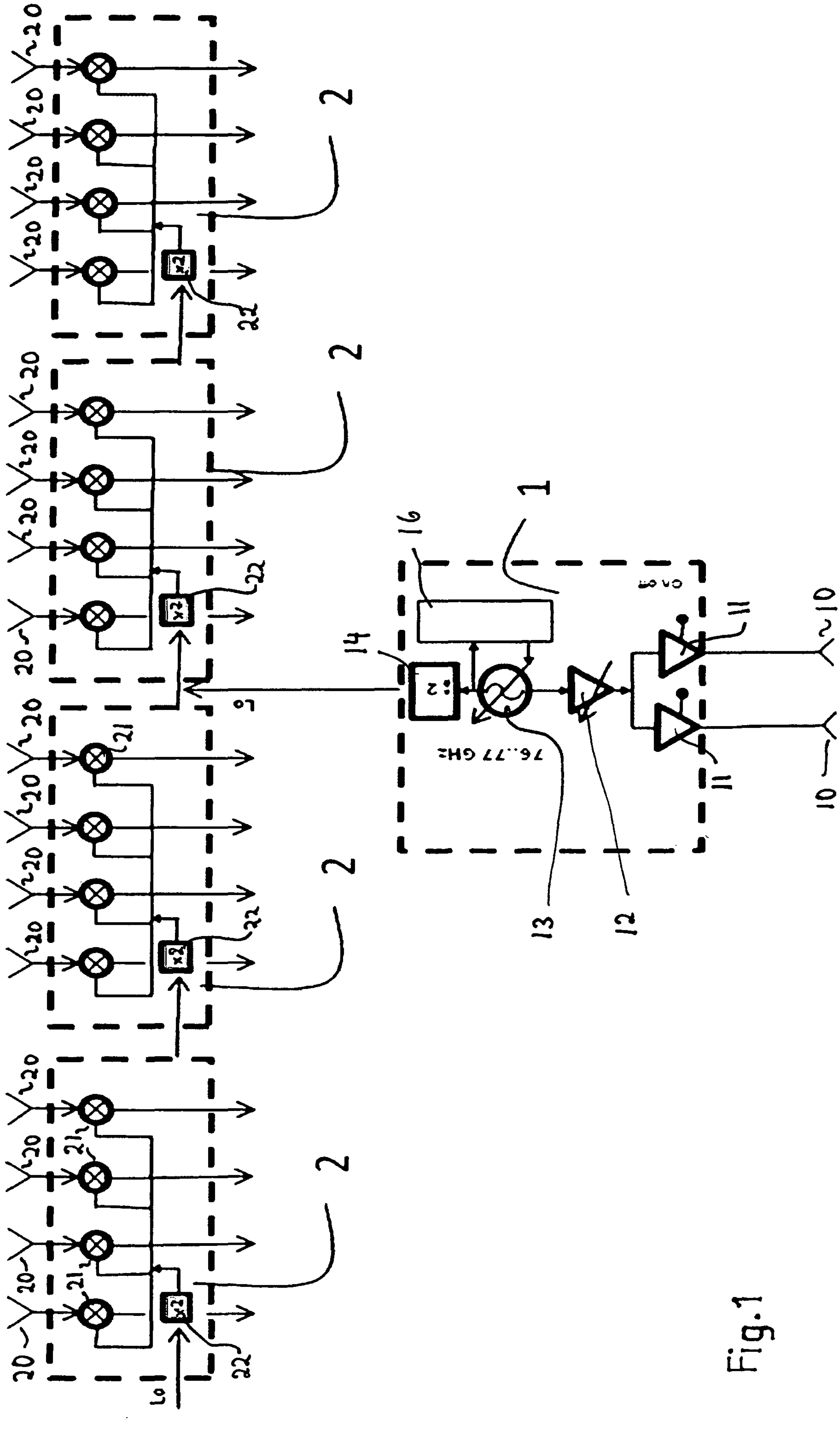


Fig.1

Fig.2

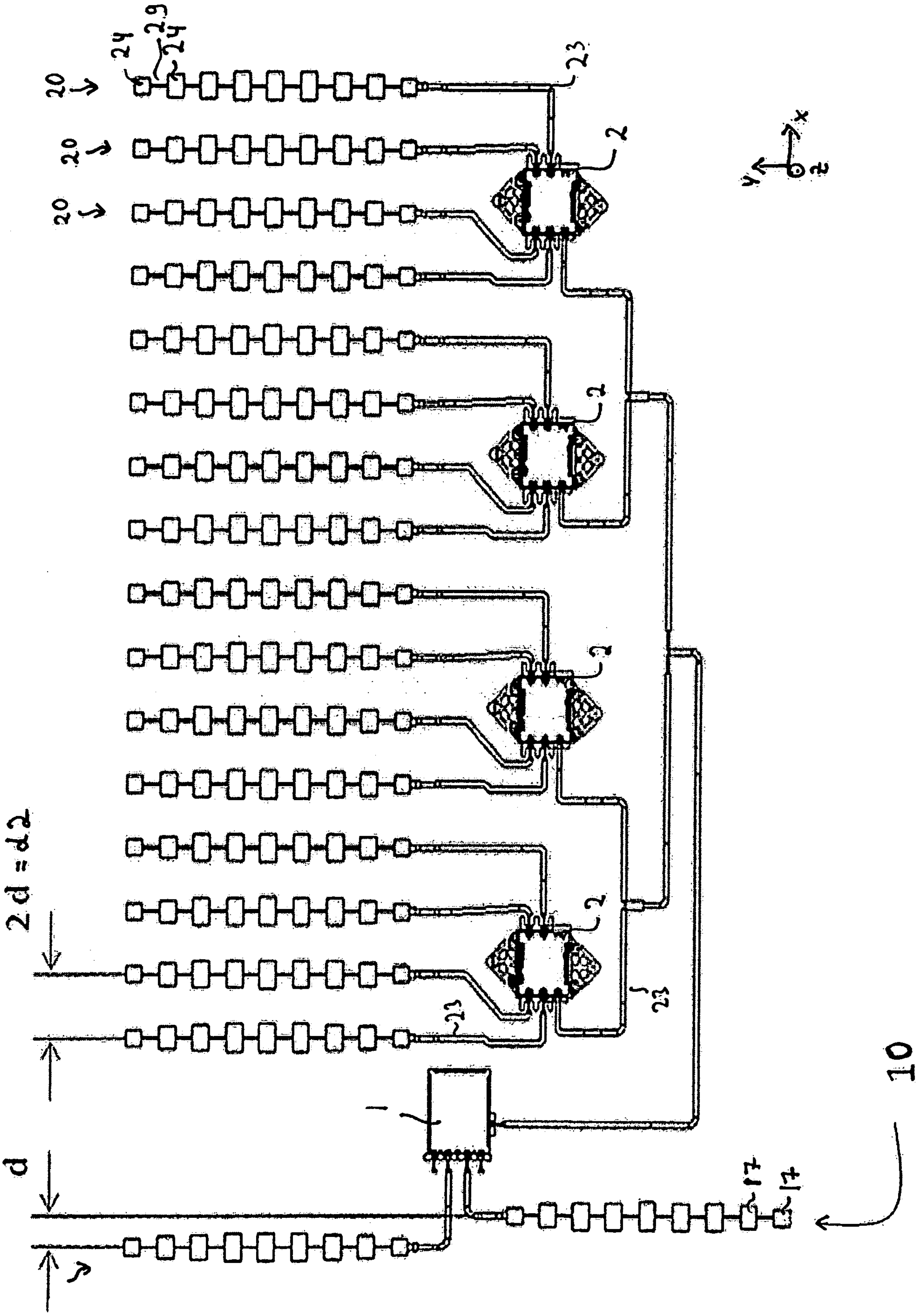

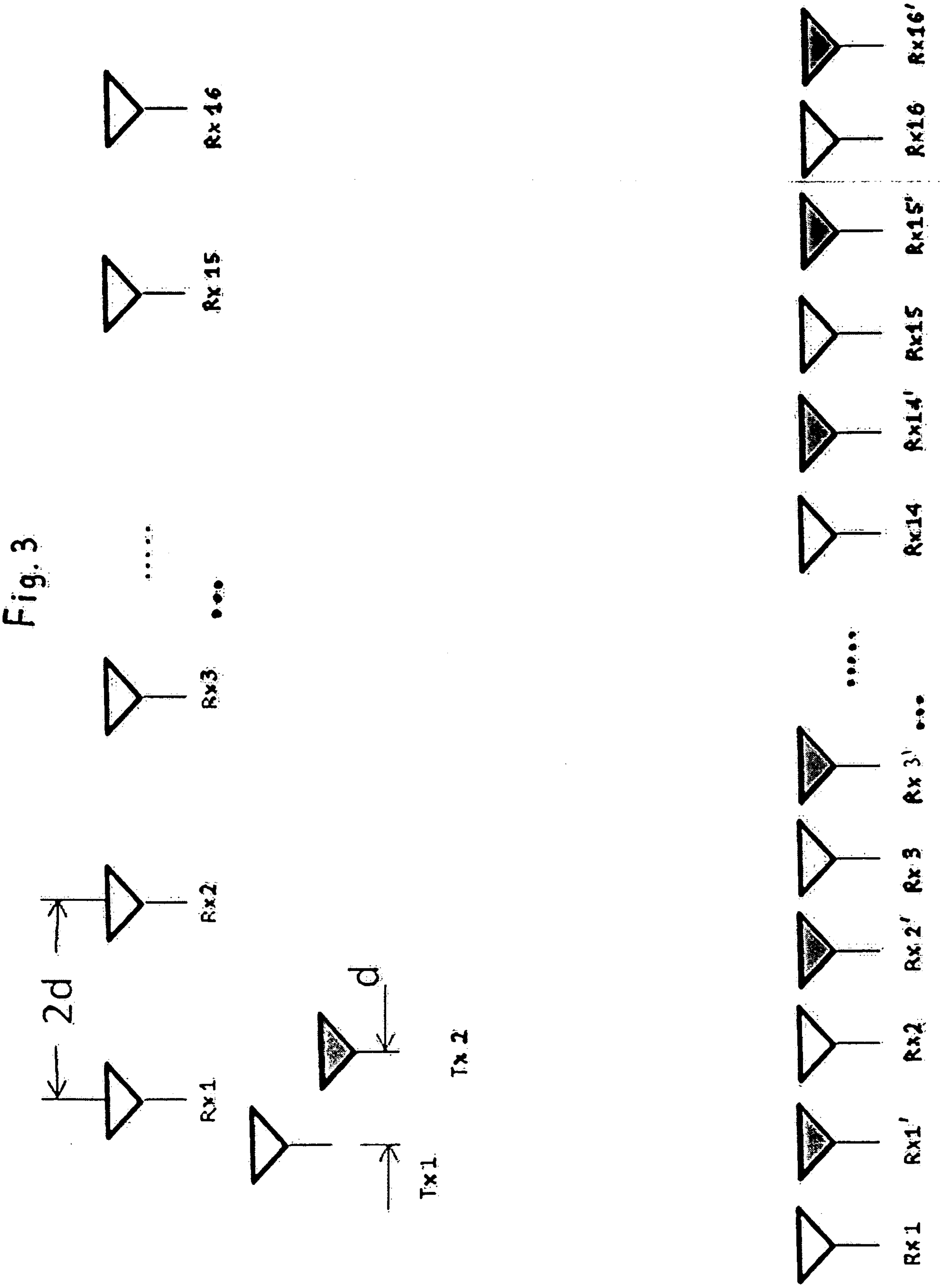
2d
d
Rx 1
Rx 2
Rx 3
Rx 15
Rx 16
Tx 1
Tx 2
Rx 1
Rx 1'
Rx 2
Rx 2'
Rx 3
Rx 3'
Rx 14
Rx 14'
Rx 15
Rx 15'
Rx 16
Rx 16'

Fig. 3

Fig. 4a

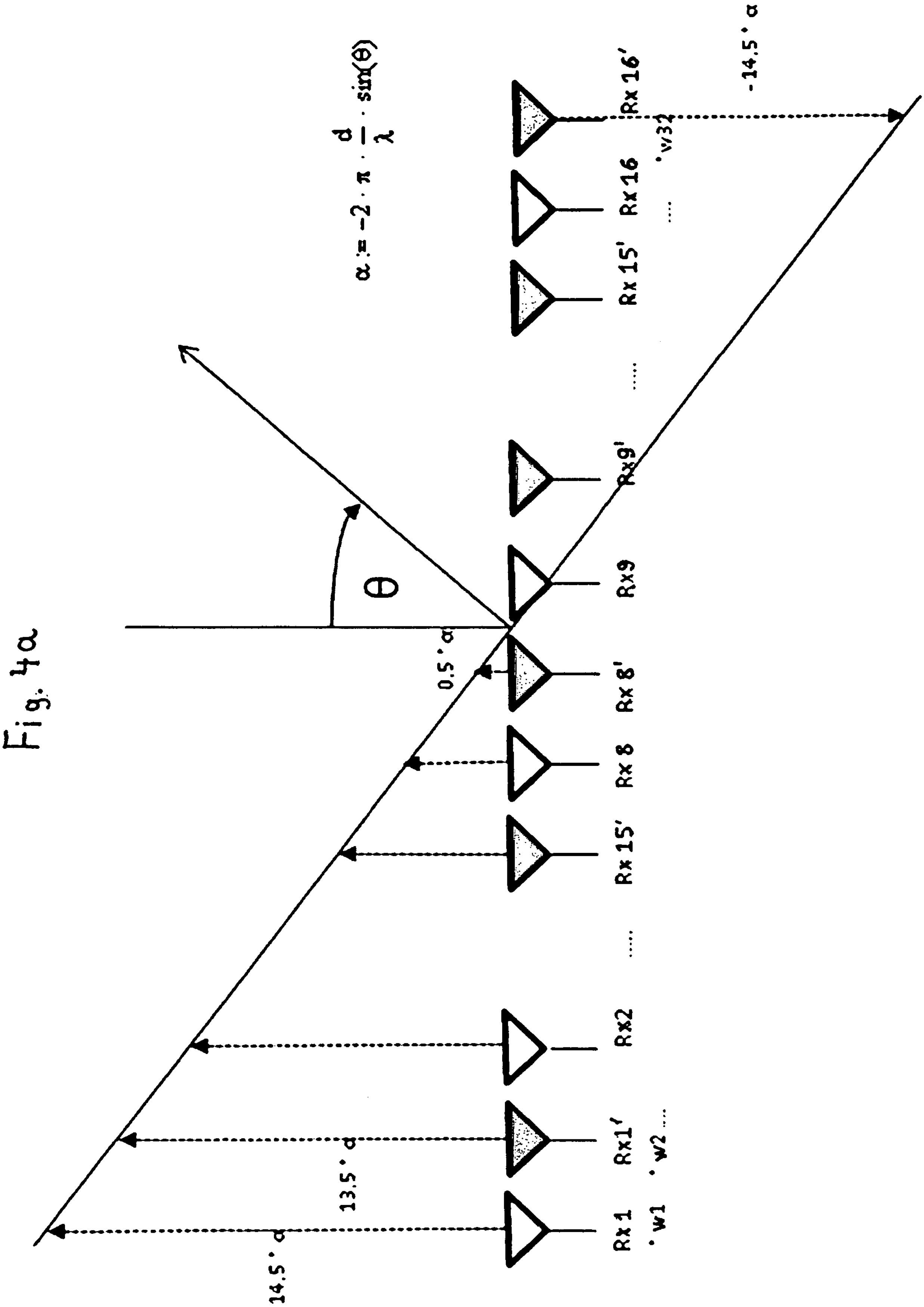

$\alpha := -2 \cdot \pi \cdot \frac{d}{\lambda} \cdot \sin(\theta)$
θ
14,5 · α
13,5 · α
0,5 · α
-14,5 · α
Rx 1
· w1
Rx1'
· w2 ....
Rx2
.....
Rx 15'
Rx 8
Rx 8'
Rx9
Rx9'
.....
Rx 15'
Rx 16
....
Rx 16'
· w32

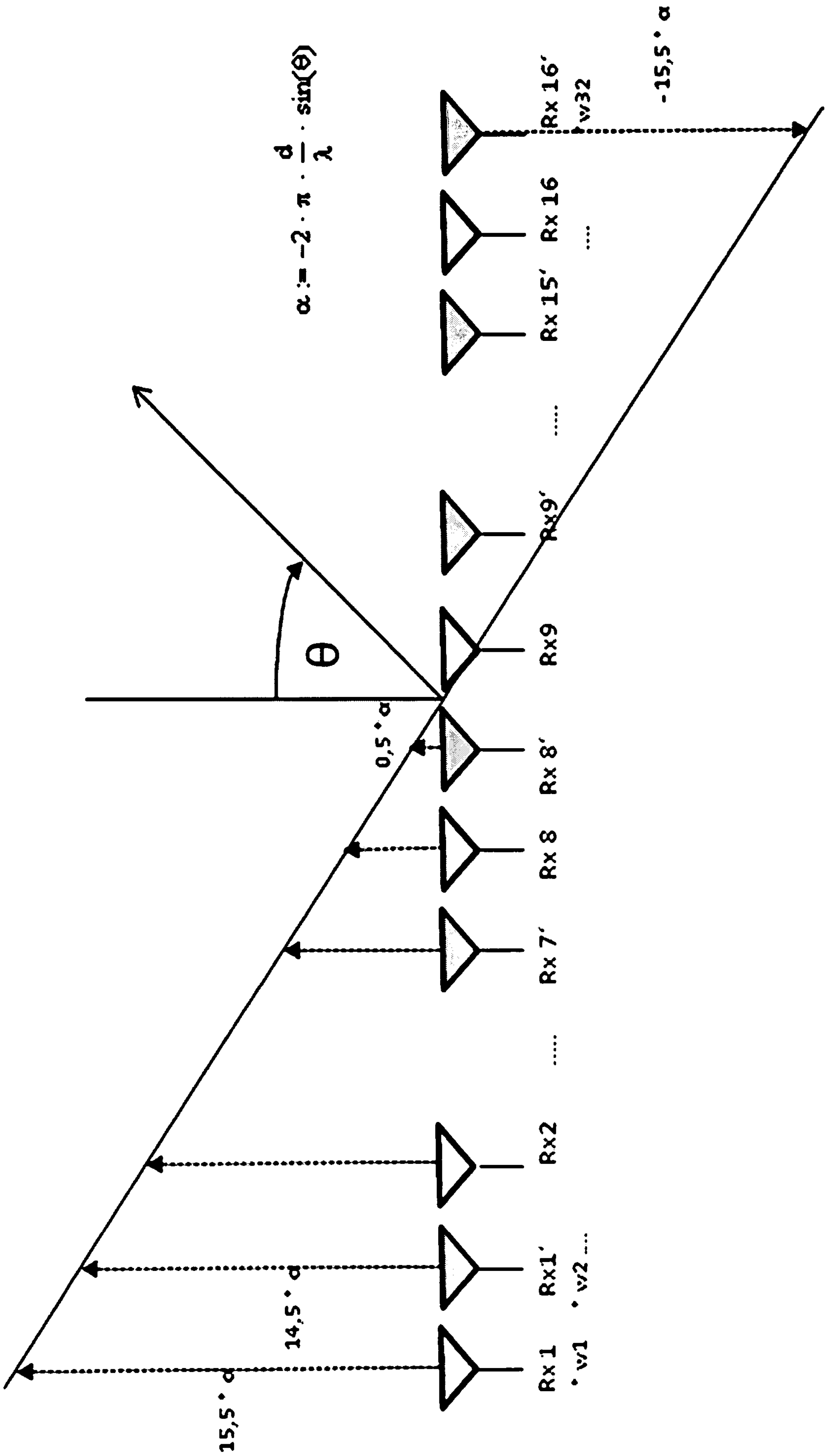

α := −2 · π · d/λ · sin(Θ)
Θ
-15,5 · α
Rx 16´
·v32
Rx 16
....
Rx 15´
....
Rx9´
Rx9
0,5 · α
Rx 8´
Rx 8
Rx 7´
....
Rx2
Rx1´
· v2 ...
14,5 · α
Rx 1
· v1
15,5 · α


Fig. 4 b

Fig. 5

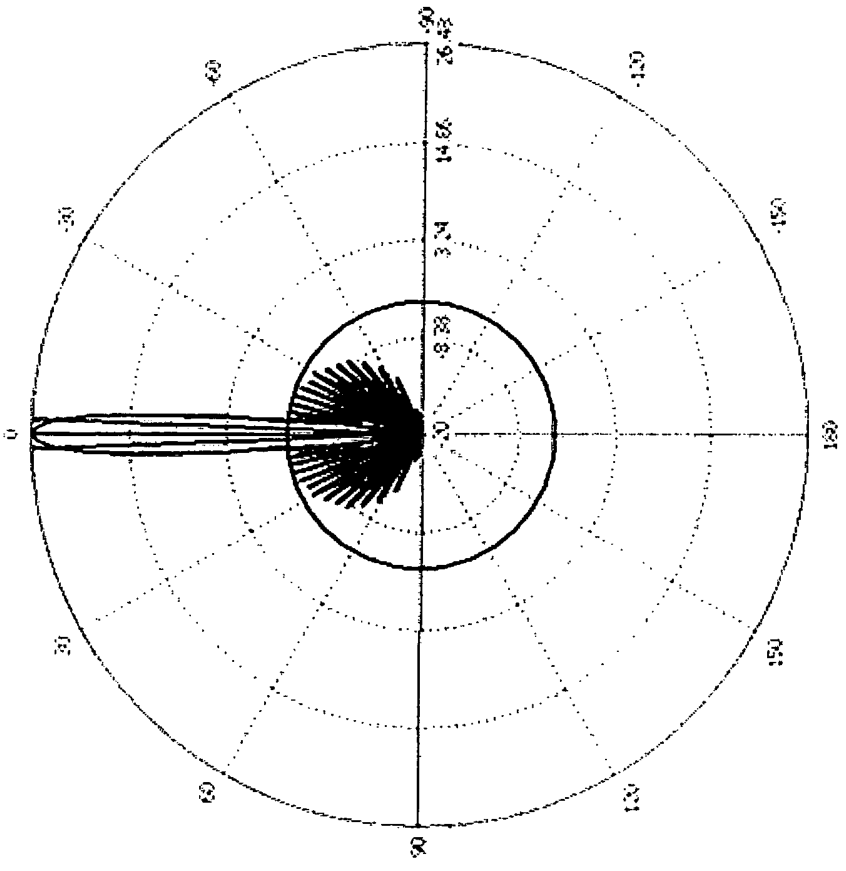


Theta / Grad vs. dB

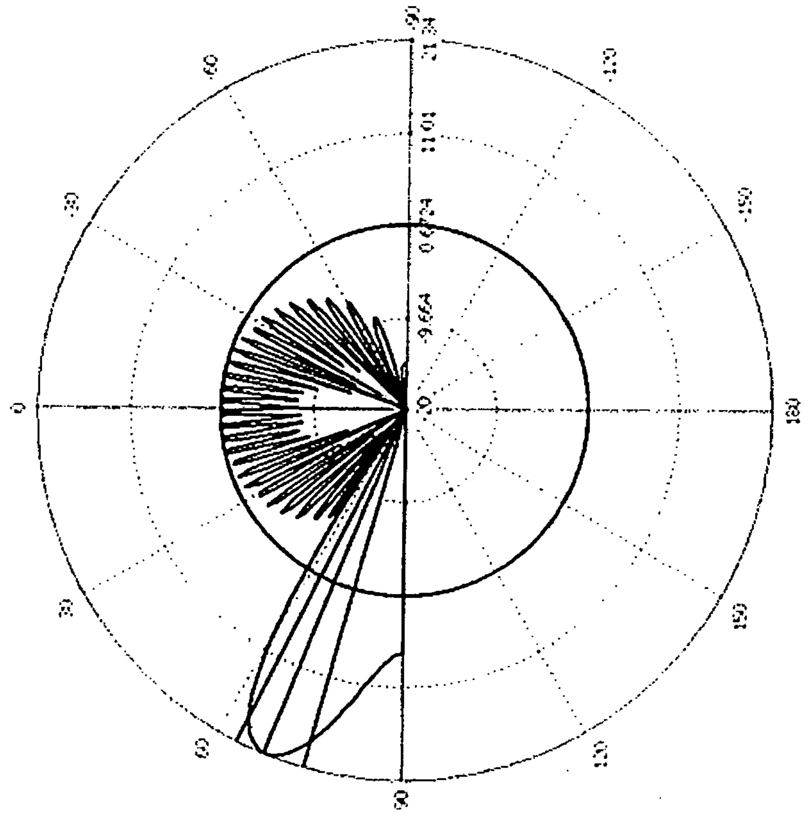


Fig. 6

Theta /Grad vs. dB

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2006066474 A1
- DE 102007039897 B2
- WO 2010066458 A1
- US 2011080314 A1
- US 2004027305 A1
- DE 102011113015


### In der Beschreibung aufgeführte Nicht-Patentliteratur


- **DR. WINFRIED MAYER.** Abbildender Radarsensor mit sendeseitig geschalteter Gruppenantenne. Cuvillier Verlag, 2008
- **N.KEES ; E.SCHMIDHAMMER ; J.DETLEFSEN.** Improvement of angular resolution of a millimeterwave imaging System by transmitter location multiplexing. *IEEE MTT-S Int. Microw. Symp. Dig.,* Mai 1995, vol. 2, 969-972